# EUROPEAN PATENT SPECIFICATION

(11) **EP 3 901 805 B1**
(45) Date of publication and mention of the grant of the patent: **09.09.2026**
(21) Application number: 21169294.2
(22) Date of filing: 20.04.2021
(51) Int. Cl.: G06F 21/57, H04L 9/40

(54) **CYBERSECURITY THREAT DETECTION PROGRAM EFFECTIVENESS ASSESSMENT METHOD AND SYSTEM**
VERFAHREN UND SYSTEM ZUR BEURTEILUNG DER WIRKSAMKEIT EINES PROGRAMMS ZUR DETEKTION VON CYBERSICHERHEITSBEDROHUNGEN
PROCÉDÉ ET SYSTÈME D'ÉVALUATION DE L'EFFICACITÉ D'UN PROGRAMME DE DÉTECTION DES MENACES DE CYBERSÉCURITÉ

(30) Priority: 20.04.2020 GB 202005666
(43) Date of publication of application: 27.10.2021
(73) Proprietor: AUMOVIO Germany GmbH, 60488 Frankfurt am Main (DE)
(72) Inventor: WANG, Yi, 339780 Singapore (SG)
(74) Representative: Aumovio Corporation

(56) References cited:
- WO-A1-2017/020928
- US-A1- 2018 150 638

## Description

### FIELD OF THE INVENTION

The invention relates to a cybersecurity threat detection program effectiveness assessment method, and a corresponding cybersecurity threat detection program effectiveness assessment system. For instance, the assessment method and the assessment system are for assessing the effectiveness of vehicular cybersecurity threat detection programs that are used by vehicles.

### BACKGROUND

Currently, most cybersecurity efforts are focussed on protecting digital systems and digital information from threats and attacks. As a result of these efforts, many cybersecurity threat detection programs, such as antivirus software programs, have been developed. However, every cybersecurity threat detection program claims to be good at detecting and preventing threats and attacks. Such claims are usually subjective, and thus it is difficult to objectively assess how good a particular cybersecurity threat detection program is.

In particular, a number of vehicular cybersecurity threat detection programs have been developed for use by vehicles to detect and prevent threats and attacks on the vehicles. Such vehicular cybersecurity threat detection programs play an important role because if an unauthorized person gains access to a vehicular system, the unauthorized person might be able to, for instance, control a vehicle by changing the destination of the autonomously driven vehicle or unexpectedly applying the brakes. Similarly, it is difficult to objectively assess how good a specific vehicular cybersecurity threat detection program is.

Patent applications WO 2017/020928 and US 2018/150638 are considered relevant prior art.

### SUMMARY

The invention is defined in the independent claims. Advantageous features are described in the dependent claims.

An objective is to provide an improved cybersecurity threat detection program effectiveness assessment method in order to objectively assess how good a specific cybersecurity threat detection program is.

According to a first aspect of the invention, there is provided a cybersecurity threat detection program effectiveness assessment method comprising the steps of: receiving a first test result data obtained from threat testing a first data set comprising manipulated threats data by a first cybersecurity threat detection program; receiving a second test result data obtained from threat testing a second data set comprising manipulated threats data by the first cybersecurity threat detection program; statistically analysing, by a processor, the first test result data together with the second test result data; and determining, by the processor, a first statistical analysis result data that indicates the effectiveness of the first cybersecurity threat detection program.

One advantage of statistically analysing the test result data is that it produces objective result data that are verifiable. Another advantage of statistically analysing the test result data is that correlations between the test result data or data sets may be identified. For instance, the cybersecurity threat detection program effectiveness assessment method may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by statistically analysing the test result data, advantageously, the statistical analysis result data obtained would quantitatively indicate the effectiveness of the cybersecurity threat detection program. A further advantage is that this cybersecurity threat detection program effectiveness assessment method obviates the necessity to install the cybersecurity threat detection program on a device, for instance, a vehicle computer system, in order to assess the effectiveness of the cybersecurity threat detection program.

Optionally, the cybersecurity threat detection program effectiveness assessment method further comprises the steps of: providing the first data set comprising manipulated threats data for threat testing by the first cybersecurity threat detection program; and providing the second data set comprising manipulated threats data for threat testing by the first cybersecurity threat detection program.

One advantage of providing the data sets, instead of, for example, relying on the supplier of the cybersecurity threat detection program to use its own data sets, is that the data sets provided may be customised to best reflect the intended operating conditions. Moreover, the assessment would be more objective if the supplier of the cybersecurity threat detection program is not responsible for creating or choosing the particular data sets to be tested.

The test result data may comprise at least one of: a false positive rate of the first cybersecurity threat detection program; a true positive rate of the first cybersecurity threat detection program; a threat detection rate of the first cybersecurity threat detection program; or a latency measurement of the first cybersecurity threat detection program. Thus, the cybersecurity threat detection program effectiveness assessment method advantageously allows many different types of test result data to be analysed.

Optionally, the step of statistically analysing the first test result data together with the second test result data comprises the step of determining, by the processor, whether the first test result data is statistically different from the second test result data.

Optionally, the step of statistically analysing the first test result data together with the second test result data comprises the step of comparing, by the processor, the mean of the first test result data with the mean of the second test result data.

Optionally, the step of statistically analysing the first test result data together with the second test result data comprises the step of performing, by the processor, a t-test on the first test result data and the second test result data. The t-test may advantageously be applied in this cybersecurity threat detection program effectiveness assessment method to reliably and accurately assess the effectiveness of cybersecurity threat detection programs.

Optionally, the cybersecurity threat detection program effectiveness assessment method further comprises the steps of: comparing, by the processor, the first statistical analysis result data with an effectiveness threshold value; and generating, by the processor, a first recommendation for the use of the first cybersecurity threat detection program if the first statistical analysis result data reaches the effectiveness threshold value.

One advantage of comparing the statistical analysis result data with the threshold value is that the comparison of two numbers is direct, simple to interpret and objective. Moreover, the step of comparing the statistical analysis result data with the threshold value is a bright-line test for whether a cybersecurity threat detection program is suitable for the intended purposes.

Optionally, the cybersecurity threat detection program effectiveness assessment method further comprises the steps of: receiving a third test result data obtained from threat testing the first data set by a second cybersecurity threat detection program; receiving a fourth test result data obtained from threat testing the second data set by the second cybersecurity threat detection program; statistically analysing, by the processor, the third test result data together with the fourth test result data; and determining, by the processor, a second statistical analysis result data that indicates the effectiveness of the second cybersecurity threat detection program.

One advantage of receiving test result data from the second cybersecurity threat detection program using the same data sets as those tested by the first cybersecurity threat detection program, is that a common and objective basis for comparing both cybersecurity threat detection programs is provided.

Optionally, the cybersecurity threat detection program effectiveness assessment method further comprises the steps of: providing the first data set comprising manipulated data for threat testing by the second cybersecurity threat detection program; and providing the second data set comprising manipulated data for threat testing by the second cybersecurity threat detection program.

One advantage of providing the data sets, instead of, for example, relying on the suppliers of the cybersecurity threat detection programs to use their own data sets, is that the data sets provided may be customised to best reflect the intended operating conditions. Moreover, the assessment would be more objective if the suppliers of the cybersecurity threat detection programs are not responsible for creating or choosing the particular data sets to be tested.

Optionally, the cybersecurity threat detection program effectiveness assessment method further comprises the steps of: comparing, by the processor, the second statistical analysis result data with the effectiveness threshold value; and generating, by the processor, a second recommendation for the use of the second cybersecurity threat detection program if the second statistical analysis result data reaches the effectiveness threshold value.

One advantage of comparing the statistical analysis result data with the threshold value is that the comparison of two numbers is direct, simple to interpret and objective. Moreover, the step of comparing the statistical analysis result data with the threshold value is a bright-line test for whether a cybersecurity threat detection program is suitable for the intended purposes.

Optionally, the cybersecurity threat detection program effectiveness assessment method further comprises the steps of: comparing, by the processor, the first statistical analysis result data of the first cybersecurity threat detection program with the second statistical analysis result data of the second cybersecurity threat detection program; and generating, by the processor, a third recommendation for the use of the cybersecurity threat detection program which has the lower statistical analysis result data. This third recommendation may, for example, be which of the cybersecurity threat detection programs assessed is the most suitable cybersecurity threat detection program for a particular purpose.

One advantage of comparing two statistical analysis result data is that the comparison of two numbers is direct, simple to interpret and objective. Moreover, the step of comparing two statistical analysis result data is a bright-line test for which cybersecurity threat detection program is most suitable for a particular purpose.

Any feature or step disclosed in the context of the first aspect of the invention may also be used, to the extent possible, in combination with and/or in the context of other aspects of the invention, and in the inventions generally.

According to a second aspect of the invention, there is provided a computer-implemented cybersecurity threat detection program effectiveness assessment method, comprising executing on a processor the steps of: receiving a first test result data obtained from threat testing a first data set comprising manipulated threats data by a cybersecurity threat detection program; receiving a second test result data obtained from threat testing a second data set comprising manipulated threats data by the cybersecurity threat detection program; statistically analysing the first test result data together with the second test result data; and determining a statistical analysis result data that indicates the effectiveness of the cybersecurity threat detection program.

One advantage of statistically analysing the test result data is that it produces objective result data that are verifiable. Another advantage of statistically analysing the test result data is that correlations between the test result data or data sets may be identified. For instance, the cybersecurity threat detection program effectiveness assessment method may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by statistically analysing the test result data, advantageously, the statistical analysis result data obtained would quantitatively indicate the effectiveness of the cybersecurity threat detection program. A further advantage is that this cybersecurity threat detection program effectiveness assessment method obviates the necessity to install the cybersecurity threat detection program on a device, for instance, a vehicle computer system, in order to assess the effectiveness of the cybersecurity threat detection program.

Any feature or step disclosed in the context of any other aspect of the invention may also be used, to the extent possible, in combination with and/or in the context of the second aspect of the invention, and in the inventions generally.

According to a third aspect of the invention, there is provided a non-transitory computer-readable medium with instructions stored thereon, that when executed by a processor, performs a cybersecurity threat detection program effectiveness assessment method, wherein the method comprises the steps of: receiving a first test result data obtained from threat testing a first data set comprising manipulated threats data by a cybersecurity threat detection program; receiving a second test result data obtained from threat testing a second data set comprising manipulated threats data by the cybersecurity threat detection program; statistically analysing the first test result data together with the second test result data; and determining a statistical analysis result data that indicates the effectiveness of the cybersecurity threat detection program.

One advantage of statistically analysing the test result data is that it produces objective result data that are verifiable. Another advantage of statistically analysing the test result data is that correlations between the test result data or data sets may be identified. For instance, the cybersecurity threat detection program effectiveness assessment method may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by statistically analysing the test result data, advantageously, the statistical analysis result data obtained would quantitatively indicate the effectiveness of the cybersecurity threat detection program. A further advantage is that this cybersecurity threat detection program effectiveness assessment method obviates the necessity to install the cybersecurity threat detection program on a device, for instance, a vehicle computer system, in order to assess the effectiveness of the cybersecurity threat detection program.

Any feature or step disclosed in the context of any other aspect of the invention may also be used, to the extent possible, in combination with and/or in the context of the third aspect of the invention, and in the inventions generally.

According to a fourth aspect of the invention, there is provided a cybersecurity threat detection program effectiveness assessment system comprising: a first memory unit for storing a first test result data obtained from threat testing a first data set comprising manipulated threats data by a cybersecurity threat detection program; a second memory unit for storing a second test result data obtained from threat testing a second data set comprising manipulated threats data by the cybersecurity threat detection program; a processor for statistically analysing the first test result data and the second test result data, and determining a statistical analysis result data that indicates the effectiveness of the cybersecurity threat detection program.

One advantage of having the processor that is able to statistically analyse the test result data is that it is able to produce objective result data that are verifiable. Another advantage of having the processor that is able to statistically analyse the test result data is that correlations between the test result data or data sets may be identified. For instance, the cybersecurity threat detection program effectiveness assessment system may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by having the processor that is able to statistically analyse the test result data, advantageously, the statistical analysis result data obtained would quantitatively indicate the effectiveness of the cybersecurity threat detection program. A further advantage is that this cybersecurity threat detection program effectiveness assessment system obviates the necessity to install the cybersecurity threat detection program on a device, for instance, a vehicle computer system, in order to assess the effectiveness of the cybersecurity threat detection program.

Any feature or step disclosed in the context of any other aspect of the invention may also be used, to the extent possible, in combination with and/or in the context of the fourth aspect of the invention, and in the inventions generally.

According to a fifth aspect of the invention, there is provided a cybersecurity threat detection program recommendation method comprising the steps of: receiving a first test result data obtained from threat testing a first data set comprising manipulated threats data by a first cybersecurity threat detection program; receiving a second test result data obtained from threat testing a second data set comprising manipulated threats data by the first cybersecurity threat detection program; statistically analysing, by a processor, the first test result data together with the second test result data; and determining, by the processor, a first statistical analysis result data that indicates the effectiveness of the first cybersecurity threat detection program.

One advantage of statistically analysing the test result data is that it produces objective result data that are verifiable. Another advantage of statistically analysing the test result data is that correlations between the test result data or data sets may be identified. For instance, the cybersecurity threat detection program recommendation method may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by statistically analysing the test result data, advantageously, the statistical analysis result data obtained would quantitatively indicate the effectiveness of the cybersecurity threat detection program. A further advantage is that this cybersecurity threat detection program recommendation method obviates the necessity to install the cybersecurity threat detection program on a device, for instance, a vehicle computer system, in order to assess the effectiveness of the cybersecurity threat detection program.

Any feature or step disclosed in the context of any other aspect of the invention may also be used, to the extent possible, in combination with and/or in the context of the fifth aspect of the invention, and in the inventions generally.

According to a sixth aspect of the invention, there is provided a vehicular cybersecurity threat detection program effectiveness assessment method comprising the steps of: providing the first data set comprising manipulated threats data for threat testing by a first vehicular cybersecurity threat detection program; receiving a first test result data obtained from threat testing a first data set comprising manipulated threats data by the first vehicular cybersecurity threat detection program; providing the second data set comprising manipulated threats data for threat testing by the first vehicular cybersecurity threat detection program; receiving a second test result data obtained from threat testing a second data set comprising manipulated threats data by the first vehicular cybersecurity threat detection program; statistically analysing, by a processor, the first test result data together with the second test result data; wherein the step of statistically analysing the first test result data together with the second test result data comprises the step of performing, by the processor, a t-test on the first test result data and the second test result data; determining, by the processor, a first statistical analysis result data that indicates the effectiveness of the first vehicular cybersecurity threat detection program; comparing, by the processor, the first statistical analysis result data with an effectiveness threshold value; generating, by the processor, a first recommendation for the use of the first cybersecurity threat detection program if the first statistical analysis result data reaches the effectiveness threshold value; providing the first data set comprising manipulated data for threat testing by a second vehicular cybersecurity threat detection program; receiving a third test result data obtained from threat testing the first data set by the second vehicular cybersecurity threat detection program; providing the second data set comprising manipulated data for threat testing by the second vehicular cybersecurity threat detection program; receiving a fourth test result data obtained from threat testing the second data set by the second vehicular cybersecurity threat detection program; statistically analysing, by a processor, the third test result data together with the fourth test result data; wherein the step of statistically analysing the third test result data together with the fourth test result data comprises the step of performing, by the processor, a t-test on the third test result data and the fourth test result data; determining, by the processor, a second statistical analysis result data that indicates the effectiveness of the second vehicular cybersecurity threat detection program; comparing, by the processor, the second statistical analysis result data with the effectiveness threshold value; generating, by the processor, a second recommendation for the use of the second cybersecurity threat detection program if the second statistical analysis result data reaches the effectiveness threshold value; wherein the first test result data, the second test result data, the third test result data and the fourth test result data comprise at least one of: a false positive rate of the first vehicular cybersecurity threat detection program or the second vehicular cybersecurity threat detection program; a true positive rate of the first vehicular cybersecurity threat detection program or the second vehicular cybersecurity threat detection program; a threat detection rate of the first vehicular cybersecurity threat detection program or the second vehicular cybersecurity threat detection program; or a latency measurement of the first vehicular cybersecurity threat detection program or the second vehicular cybersecurity threat detection program; comparing, by the processor, the first statistical analysis result data of the first cybersecurity threat detection program with the second statistical analysis result data of the second cybersecurity threat detection program; and generating, by the processor, a third recommendation for the use of the cybersecurity threat detection program which has the lower statistical analysis result data.

Any feature or step disclosed in the context of any other aspect of the invention may also be used, to the extent possible, in combination with and/or in the context of the sixth aspect of the invention, and in the inventions generally.

According to a seventh aspect of the invention, there is provided a computer-implemented cybersecurity threat detection program effectiveness assessment method comprising the steps of: receiving, by a processor, a first test result data obtained from threat testing a first data set comprising manipulated threats data by a first cybersecurity threat detection program; receiving, by the processor, a second test result data obtained from threat testing a second data set comprising manipulated threats data by the first cybersecurity threat detection program; statistically analysing, by the processor, the first test result data together with the second test result data; and determining, by the processor, a first statistical analysis result data that indicates the effectiveness of the first cybersecurity threat detection program.

One advantage of statistically analysing the test result data is that it produces objective results that are verifiable. Another advantage of statistically analysing the test results is that correlations between the test results or data sets may be identified. For instance, the cybersecurity threat detection program effectiveness assessment method may determine whether a cybersecurity threat detection program would perform sufficiently well under two different operating conditions, because a particular cybersecurity threat detection program may perform well under only one of the operating conditions. If the cybersecurity threat detection program is configured for use in vehicles to detect cyberthreats, the two operating conditions may, for example, respectively be highway travel and urban travel. Moreover, by statistically analysing the test results, advantageously, the statistical analysis result data obtained would quantitatively indicate the effectiveness of the cybersecurity threat detection program. A further advantage is that this cybersecurity threat detection program effectiveness assessment method obviates the necessity to install the cybersecurity threat detection program on a device, for instance, a vehicle computer system, in order to assess the effectiveness of the cybersecurity threat detection program.

Optionally, the cybersecurity threat detection program effectiveness assessment method further comprises the steps of: providing, by the processor, the first data set comprising manipulated threats data for threat testing by the first cybersecurity threat detection program; and providing, by the processor, the second data set comprising manipulated threats data for threat testing by the first cybersecurity threat detection program.

One advantage of providing the data sets, instead of, for example, relying on the supplier of the cybersecurity threat detection program to use its own data sets, is that the data sets provided may be customised to best reflect the intended operating conditions. Moreover, the assessment would be more objective if the supplier of the cybersecurity threat detection program is not responsible for creating or choosing the particular data sets to be tested.

The test results may comprise at least one of: a false positive rate of the first cybersecurity threat detection program; a true positive rate of the first cybersecurity threat detection program; a threat detection rate of the first cybersecurity threat detection program; or a latency measurement of the first cybersecurity threat detection program. Thus, the cybersecurity threat detection program effectiveness assessment method advantageously allows many different types of test results to be analysed.

Optionally, the step of statistically analysing the first test result data together with the second test result data comprises the step of determining, by the processor, whether the first test result data is statistically different from the second test result data.

Optionally, the step of statistically analysing the first test result data together with the second test result data comprises the step of comparing, by the processor, the mean of the first test result data with the mean of the second test result data.

Optionally, the step of statistically analysing the first test result data together with the second test result data comprises the step of performing, by the processor, a t-test on the first test result data and the second test result data. The t-test may advantageously be applied in this cybersecurity threat detection program effectiveness assessment method to reliably and accurately assess the effectiveness of cybersecurity threat detection programs.

Optionally, the cybersecurity threat detection program effectiveness assessment method further comprises the steps of: comparing, by the processor, the first statistical analysis result data with an effectiveness threshold value; and generating, by the processor, a first recommendation for the use of the first cybersecurity threat detection program if the first statistical analysis result data reaches the effectiveness threshold value.

One advantage of comparing the statistical analysis result data with the threshold value is that the comparison of two numbers is direct, simple to interpret and objective. Moreover, the step of comparing the statistical analysis result data with the threshold value is a bright-line test for whether a cybersecurity threat detection program is suitable for the intended purposes.

Optionally, the cybersecurity threat detection program effectiveness assessment method further comprises the steps of: receiving, by the processor, a third test result data obtained from threat testing the first data set by a second cybersecurity threat detection program; receiving, by the processor, a fourth test result data obtained from threat testing the second data set by the second cybersecurity threat detection program; statistically analysing, by the processor, the third test result data together with the fourth test result data; and determining, by the processor, a second statistical analysis result data that indicates the effectiveness of the second cybersecurity threat detection program.

One advantage of receiving test results from the second cybersecurity threat detection program using the same data sets as those tested by the first cybersecurity threat detection program, is that a common and objective basis for comparing both cybersecurity threat detection programs is provided.

Optionally, the cybersecurity threat detection program effectiveness assessment method further comprises the steps of: providing, by the processor, the first data set comprising manipulated data for threat testing by the second cybersecurity threat detection program; and providing, by the processor, the second data set comprising manipulated data for threat testing by the second cybersecurity threat detection program.

One advantage of providing the data sets, instead of, for example, relying on the suppliers of the cybersecurity threat detection programs to use their own data sets, is that the data sets provided may be customised to best reflect the intended operating conditions. Moreover, the assessment would be more objective if the suppliers of the cybersecurity threat detection programs are not responsible for creating or choosing the particular data sets to be tested.

Optionally, the cybersecurity threat detection program effectiveness assessment method further comprises the steps of: comparing, by the processor, the second statistical analysis result data with the effectiveness threshold value; and generating, by the processor, a second recommendation for the use of the second cybersecurity threat detection program if the second statistical analysis result data reaches the effectiveness threshold value.

One advantage of comparing the statistical analysis result data with the threshold value is that the comparison of two numbers is direct, simple to interpret and objective. Moreover, the step of comparing the statistical analysis result data with the threshold value is a bright-line test for whether a cybersecurity threat detection program is suitable for the intended purposes.

Optionally, the cybersecurity threat detection program effectiveness assessment method further comprises the steps of: comparing, by the processor, the first statistical analysis result data of the first cybersecurity threat detection program with the second statistical analysis result data of the second cybersecurity threat detection program; and generating, by the processor, a third recommendation for the use of the cybersecurity threat detection program which has the lower statistical analysis result data. This third recommendation may, for example, be which of the cybersecurity threat detection programs assessed is the most suitable cybersecurity threat detection program for a particular purpose.

One advantage of comparing two statistical analysis results is that the comparison of two numbers is direct, simple to interpret and objective. Moreover, the step of comparing two statistical analysis results is a bright-line test for which cybersecurity threat detection program is most suitable for a particular purpose.

Any feature or step disclosed in the context of the seventh aspect of the invention may also be used, to the extent possible, in combination with and/or in the context of other aspects of the invention, and in the inventions generally.

According to an eighth aspect of the invention, there is provided a vehicular cybersecurity threat detection program effectiveness assessment method comprising the steps of: providing, by a processor, the first data set comprising manipulated threats data for threat testing by a first vehicular cybersecurity threat detection program; receiving, by the processor, a first test result data obtained from threat testing a first data set comprising manipulated threats data by the first vehicular cybersecurity threat detection program; providing, by the processor, the second data set comprising manipulated threats data for threat testing by the first vehicular cybersecurity threat detection program; receiving, by the processor, a second test result data obtained from threat testing a second data set comprising manipulated threats data by the first vehicular cybersecurity threat detection program; statistically analysing, by the processor, the first test result data together with the second test result data; wherein the step of statistically analysing the first test result data together with the second test result data comprises the step of performing, by the processor, a t-test on the first test result data and the second test result data; determining, by the processor, a first statistical analysis result data that indicates the effectiveness of the first vehicular cybersecurity threat detection program; comparing, by the processor, the first statistical analysis result data with an effectiveness threshold value; generating, by the processor, a first recommendation for the use of the first cybersecurity threat detection program if the first statistical analysis result data reaches the effectiveness threshold value; providing, by the processor, the first data set comprising manipulated data for threat testing by a second vehicular cybersecurity threat detection program; receiving, by the processor, a third test result data obtained from threat testing the first data set by the second vehicular cybersecurity threat detection program; providing, by the processor, the second data set comprising manipulated data for threat testing by the second vehicular cybersecurity threat detection program; receiving, by the processor, a fourth test result data obtained from threat testing the second data set by the second vehicular cybersecurity threat detection program; statistically analysing, by a processor, the third test result data together with the fourth test result data; wherein the step of statistically analysing the third test result data together with the fourth test result data comprises the step of performing, by the processor, a t-test on the third test result data and the fourth test result data; determining, by the processor, a second statistical analysis result data that indicates the effectiveness of the second vehicular cybersecurity threat detection program; comparing, by the processor, the second statistical analysis result data with the effectiveness threshold value; generating, by the processor, a second recommendation for the use of the second cybersecurity threat detection program if the second statistical analysis result data reaches the effectiveness threshold value; wherein the first test result data, the second test result data, the third test result data and the fourth test result data comprise at least one of: a false positive rate of the first vehicular cybersecurity threat detection program or the second vehicular cybersecurity threat detection program; a true positive rate of the first vehicular cybersecurity threat detection program or the second vehicular cybersecurity threat detection program; a threat detection rate of the first vehicular cybersecurity threat detection program or the second vehicular cybersecurity threat detection program; or a latency measurement of the first vehicular cybersecurity threat detection program or the second vehicular cybersecurity threat detection program; comparing, by the processor, the first statistical analysis result data of the first cybersecurity threat detection program with the second statistical analysis result data of the second cybersecurity threat detection program; and generating, by the processor, a third recommendation for the use of the cybersecurity threat detection program which has the lower statistical analysis result data.

Any feature or step disclosed in the context of any other aspect of the invention may also be used, to the extent possible, in combination with and/or in the context of the eight aspect of the invention, and in the inventions generally.

In this summary, in the description below, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

### BRIEF DESCRIPTION OF THE DRAWINGS

These and other features, aspects, and advantages will become better understood with regard to the following description, appended claims, and accompanying drawings where:
Figure 1 shows a cybersecurity threat detection program effectiveness assessment system; and
Figure 2 shows a diagram for a cybersecurity threat detection program effectiveness assessment method using the cybersecurity threat detection program effectiveness assessment system of Figure 1.

In the drawings, like parts are denoted by like reference numerals.

### DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

The term "comprises" and grammatical equivalents thereof are used herein to mean that other components, ingredients, steps, et cetera are optionally present. For example, an article "comprising" (or "which comprises") components A, B, and C can consist of (that is, contain only) components A, B, and C, or can contain not only components A B, and C but also one or more other components.

Where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

The term "at least" followed by a number is used in to denote the start of a range beginning with that number (which may be a range having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending on the variable being defined) . For example, "at most 4" means 4 or less than 4, and "at most 40%" means 40% or less than 40%. When, in this specification, a range is given as "(a first number) to (a second number)" or "(a first number) - (a second number) ", this means a range whose lower limit is the first number and whose upper limit is the second number. For example, 25 to 100 mm means a range whose lower limit is 25 mm, and whose upper limit is 100 mm.

As used in the summary above, in this description, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

As used in the summary above, in this description, in the claims below, and in the accompanying drawings, the term "threat" or the term "cyberthreat" means something that may or may not happen, but that has the potential to cause harm or damage to a computer system or a computer network. An example of a threat is unauthorised access to information, for instance, when information has been leaked out of a computer system or a computer network, or when a computer system or a computer network has been hacked to access the information stored within.

As used in the summary above, in this description, in the claims below, and in the accompanying drawings, the term "attack" or the term "cyberattack" means any type of offensive manoeuvre that gains unauthorised access to or damages a computer system or a computer network. An attack or a cyberattack is an example of a threat. An attack may the involve unauthorised interception of information, the unauthorised alteration or corruption of information, the fabrication of false information, or the inundation of unwanted information.

As used in the summary above, in this description, in the claims below, and in the accompanying drawings, the term "false positive rate" is defined by the following equation: $\begin{matrix}False Positive Rate \\ = \frac{Number of false positive threats}{Number of false positive threats + Number of true negative threats}\end{matrix}$

As used in the summary above, in this description, in the claims below, and in the accompanying drawings, the term "true positive rate" is defined by the following equation: $\begin{matrix}True Positive Rate \\ = \frac{Number of true positive threats \left(TP\right)}{Number of true positive threats \left(TP\right) + Number of false negative threats \left(FN\right)}\end{matrix}$

As used in the summary above, in this description, in the claims below, and in the accompanying drawings, the term "precision" is defined by the following equation: $\begin{matrix}Precision \\ = \frac{Number of true positive threats \left(TP\right)}{Number of true positive threats \left(TP\right) + Number of false positive threats \left(FP\right)}\end{matrix}$

As used in the summary above, in this description, in the claims below, and in the accompanying drawings, the term "accuracy" is defined by the following equation: $\begin{matrix}Accuracy \\ = \frac{Number of true positive threats \left(TP\right) + Number of true negative threats \left(TN\right)}{TP + TN + FP + FN}\end{matrix}$

As used in the summary above, in this description, in the claims below, and in the accompanying drawings, the term "t-test" is defined by the following equation: $t = \frac{Mean of A - Mean of B}{√ \left(\left(\frac{{\left(Standard deviation of A\right)}^{2}}{Number of samples in A}\right)+\left(\frac{{\left(Standard deviation of B\right)}^{2}}{Number of samples in B}\right)\right)}$

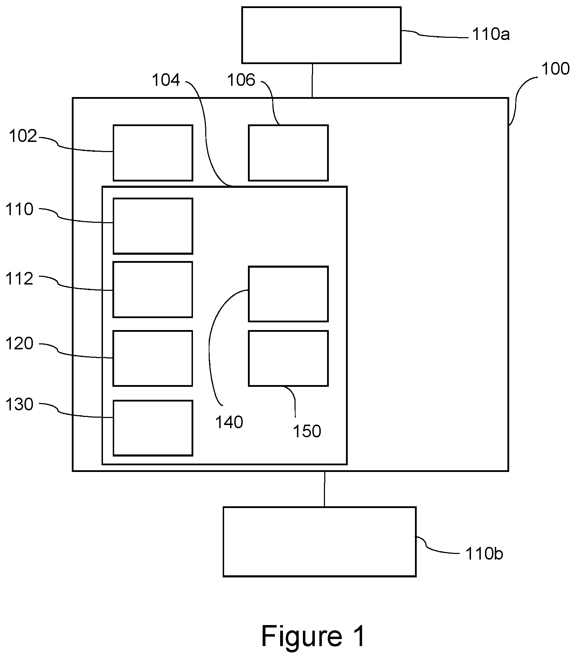

Figure 1 shows a cybersecurity threat detection program **ef**fectiveness assessment system 100 comprising a processor 102, a memory device 104 and a display or screen 106. The cybersecurity threat detection program effectiveness assessment system 100 may be in communication with a first cybersecurity threat detection program 110a and a second cybersecurity threat detection program **110b.** The cybersecurity threat detection program effectiveness assessment system 100 may be in communication with fewer or more cybersecurity threat detection programs 110. The cybersecurity threat detection program effectiveness assessment system 100 may comprise hardware, software comprising instructions executable by a processor, or a combination of software and hardware.

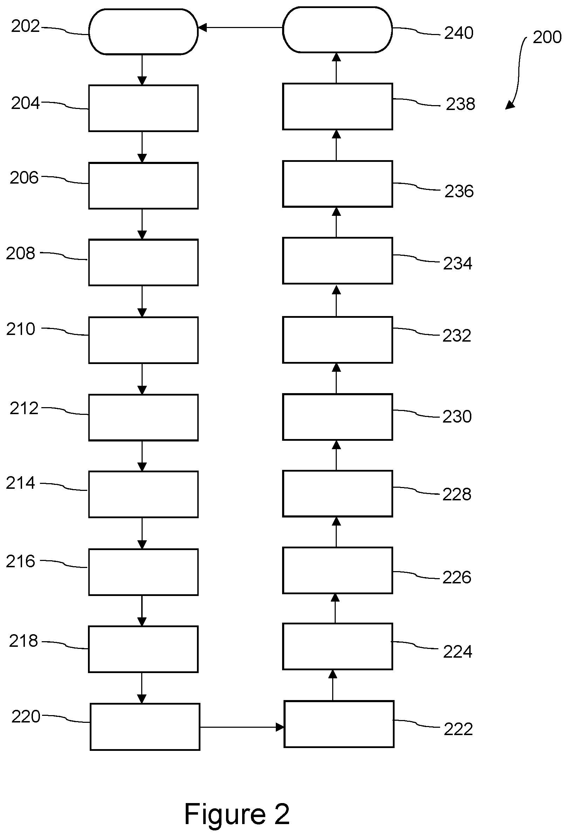

The memory device 104 comprises volatile memory and nonvolatile memory. The memory device 104 is suitable for storing software programs or instructions 112 and data. The memory device 104 may store instructions 112, that when executed by the processor 102, performs a cybersecurity threat detection program effectiveness assessment method (200: Figure 2). The memory device 104 may comprise a plurality of memory units, each memory unit for respectively storing cybersecurity threat detection programs 110, data sets 120, test results 130, statistical analysis results 140 and threshold values 150. The memory device 104 may comprise hardware, software comprising instructions executable by a processor, or a combination of software and hardware.

The processor 102 is suitable for performing calculations, performing logical operations and executing instructions 112. The screen 106 is suitable for displaying information, for example, data sets 120, test results 130, statistical analysis results 140, threshold values 150 or a recommendation.

Figure 2 shows a diagram for a cybersecurity threat detection program effectiveness assessment method 200 using the cybersecurity threat detection program effectiveness assessment system 100 of Figure **1****.** The steps or acts of the cybersecurity threat detection program effectiveness assessment method 200 may be performed by at least one processor 102, for instance, by the at least one processor 102 executing instructions stored on at least one non-transitory computer-readable medium of the memory device 104.

At step 202, the processor 102 of the cybersecurity threat detection program effectiveness assessment system 100 starts by executing software instructions or instructions 112 to initialise the cybersecurity threat detection program recommendation method or cybersecurity threat detection program effectiveness assessment method 200.

At step 204, a first data set 120a comprising manipulated threats data is provided to the first cybersecurity threat detection program 110a for threat testing. The manipulated threats data comprise normal operating data that reflect normal operating conditions, with some of the normal operating data modified to simulate a cyberattack, for instance, the alteration or corruption of the normal operating data, the fabrication of false data or the inundation of unwanted data. The first data set 120a may comprise generic data or customised data that reflect the intended operating conditions. The first data set 120a may be provided by the supplier of the first cybersecurity threat detection program 110a or the user of the cybersecurity threat detection program effectiveness assessment system 100. On the one hand, it is convenient for the user of the cybersecurity threat detection program effectiveness assessment system 100 if the supplier of the first cybersecurity threat detection program 110a prepares and provides the first data set 120a, but on the other hand, the first data set 120a may be customised to best reflect the intended operating conditions if the user of the cybersecurity threat detection program effectiveness assessment system 100 prepares and provides the first data set 120a. Moreover, the assessment by the cybersecurity threat detection program effectiveness assessment system 100 would be more objective if the supplier of the first cybersecurity threat detection program 110a is not responsible for creating or choosing the particular data set 120 to be tested. The first cybersecurity threat detection program 110a tests the first data set 120a for threats by scanning the first data set 120a for any threat.

At step 206, after threat testing, a first test result data 130a is received by the cybersecurity threat detection program effectiveness assessment system 100. The first test result data 130a may comprise at least one of a false positive rate of the first cybersecurity threat detection program 110a, a true positive rate of the first cybersecurity threat detection program 110a, a threat detection rate of the first cybersecurity threat detection program 110a, or a latency measurement of the first cybersecurity threat detection program 110a. Thus, the cybersecurity threat detection program effectiveness assessment system 100 advantageously allows many different types of test results 130 to be used.

At step 208, a second data set 120b comprising manipulated threats data is provided to the first cybersecurity threat detection program 110a for threat testing. The second data set 120b may comprise generic data or customised data that reflect the intended operating conditions. The first data set 120a may reflect a different operating condition from that of the second data set 120b. For example, if the first cybersecurity threat detection program 110a is configured to be used in a vehicle to detect threats, the first data set 120a may reflect highway travel and the second data set 120b may reflect urban travel. Similarly, the second data set 120b may be provided by the supplier of the first cybersecurity threat detection program 110a or the user of the cybersecurity threat detection program effectiveness assessment system 100. On the one hand, it is convenient for the user of the cybersecurity threat detection program effectiveness assessment system 100 if the supplier of the first cybersecurity threat detection program 110a prepares and provides the second data set 120b, but on the other hand, the second data set 120b may be customised to best reflect the intended operating conditions if the user of the cybersecurity threat detection program effectiveness assessment system 100 prepares and provides the second data set 120b. Moreover, the assessment by the cybersecurity threat detection program effectiveness assessment system 100 would be more objective if the supplier of the first cybersecurity threat detection program 110a is not responsible for creating or choosing the particular data set 120 to be tested. The first cybersecurity threat detection program 110a tests the second data set 120b for threats by scanning the second data set 120b for any threat.

At step 210, after the threat testing, a second test result data 130b is received by the cybersecurity threat detection program effectiveness assessment system 100. The second test result data 130b may comprise at least one of a false positive rate of the first cybersecurity threat detection program 110a, a true positive rate of the first cybersecurity threat detection program 110a, a threat detection rate of the first cybersecurity threat detection program 110a, or a latency measurement of the first cybersecurity threat detection program 110a. Thus, the cybersecurity threat detection program effectiveness assessment system 100 advantageously allows many different types of test results 130 to be used.

At step 212, the processor 102 executes instructions 112 to statistically analyse the first test result data 130a together with the second test result data 130b. The processor 102 may execute instructions 112 to compare the mean of the first test result data 130a with the mean of the second test result data 130b in order to statistically analyse the first test result data 130a together with the second test result data 130b. The processor 102 may also execute instructions 112 to perform a t-test on the first test result data 130a and the second test result data 130b in order to statistically analyse the first test result data 130a together with the second test result data 130b. The t-test has advantageously been shown to be an accurate and reliable method of assessing the effectiveness of cybersecurity threat detection programs 110.

At step 214, the processor 102 executes instructions 112 to determine a first statistical analysis result data 140a. One advantage of statistically analysing the first test result data 130a together with the second test result data 130b is that it produces objective results that are verifiable. Another advantage of statistically analysing the first test result data 130a together with the second test result data 130b is that correlations between the first test result data 130a and the second test result data 130b or between the first data set 120a and the second data set 120b may be identified. For instance, the cybersecurity threat detection program effectiveness assessment method 200 may determine whether the first cybersecurity threat detection program 110a would perform sufficiently well under two different operating conditions, because the first cybersecurity threat detection program 110a may perform well under only one of the operating conditions. If the first cybersecurity threat detection program 110a is configured for use in vehicles to detect cyberthreats, the two operating conditions may, for example, respectively be highway travel and urban travel. Moreover, by statistically analysing the first test result data 130a together with the second test result data 130b, advantageously, the first statistical analysis result data 140a obtained would quantitatively indicate the effectiveness of the first cybersecurity threat detection program 110a.

At step 216, the processor 102 executes instructions 112 to compare the first statistical analysis result data 140a with an effectiveness threshold value 150a. The effectiveness threshold value 150a may be a numerical value or a numerical range, that is an indication of the effectiveness of a cybersecurity threat detection program 110 in detecting threats. One advantage of comparing the first statistical analysis result data 140a with the effectiveness threshold value 150a is that the comparison of two numbers is direct, simple to interpret and objective. Moreover, the step of comparing the first statistical analysis result data 140a with the effectiveness threshold value 150a is a bright-line test for whether a cybersecurity threat detection program 110 is suitable for the intended purposes.

At step 218, the processor 102 executes instructions 112 to generate a first recommendation for the use of the first cybersecurity threat detection program 110a if the first statistical analysis result data 140a reaches the effectiveness threshold value 150a. The first recommendation may comprise a message displayed on the screen 106.

At step 220, the first data set 120a comprising manipulated threats data is provided to the second cybersecurity threat detection program 110b for threat testing. The first data set 120a may be provided by the supplier of the first cybersecurity threat detection program 110a, the supplier of the second cybersecurity threat detection program 110b or the user of the cybersecurity threat detection program effectiveness assessment system 100. On the one hand, it is convenient for the user of the cybersecurity threat detection program effectiveness assessment system 100 if the supplier of the first cybersecurity threat detection program 110a or the supplier of the second cybersecurity threat detection program 110b prepares and provides the first data set 120a, but on the other hand, the first data set 120a may be customised to best reflect the intended operating conditions if the user of the cybersecurity threat detection program effectiveness assessment system 100 prepares and provides the first data set 120a. Moreover, the assessment by the cybersecurity threat detection program effectiveness assessment system 100 would be more objective if the supplier of the first cybersecurity threat detection program 110a or the supplier of the second cybersecurity threat detection program 110b is not responsible for creating or choosing the particular data set 120 to be tested. Furthermore, one advantage of providing the same first data set 120a for threat testing by both the first cybersecurity threat detection program 110a and the second cybersecurity threat detection program 110b, is that a common and objective basis for comparing both the first cybersecurity threat detection program 110a and the second cybersecurity threat detection program 110b is provided. The second cybersecurity threat detection program 110b tests the first data set 120a for threats by scanning the first data set 120a for any threat.

At step 222, after threat testing, a third test result data 130c is received by the cybersecurity threat detection program effectiveness assessment system 100. The third test result data 130c may comprise at least one of a false positive rate of the second cybersecurity threat detection program 110b, a true positive rate of the second cybersecurity threat detection program 110b, a threat detection rate of the second cybersecurity threat detection program 110b, or a latency measurement of the second cybersecurity threat detection program 110b. Thus, the cybersecurity threat detection program effectiveness assessment system 100 advantageously allows many different types of test results 130 to be used.

At step 224, the second data set 120b comprising manipulated threats data is provided to the second cybersecurity threat detection program 110b for threat testing. Similarly, the second data set 120b may be provided by the supplier of the first cybersecurity threat detection program 110a, the supplier of the second cybersecurity threat detection program 110b or the user of the cybersecurity threat detection program effectiveness assessment system 100. On the one hand, it is convenient for the user of the cybersecurity threat detection program effectiveness assessment system 100 if the supplier of the first cybersecurity threat detection program 110a or the supplier of the second cybersecurity threat detection program 110b prepares and provides the second data set 120b, but on the other hand, the second data set 120b may be customised to best reflect the intended operating conditions if the user of the cybersecurity threat detection program effectiveness assessment system 100 prepares and provides the second data set 120b. Moreover, the assessment by the cybersecurity threat detection program effectiveness assessment system 100 would be more objective if the supplier of the first cybersecurity threat detection program 110a or the supplier of the second cybersecurity threat detection program 110b is not responsible for creating or choosing the particular data set 120 to be tested. Furthermore, one advantage of providing the same second data set 120b for threat testing by both the first cybersecurity threat detection program 110a and the second cybersecurity threat detection program 110b, is that a common and objective basis for comparing both the first cybersecurity threat detection program 110a and the second cybersecurity threat detection program 110b is provided. The supplier of the second cybersecurity threat detection program 110b tests the second data set 120b for threats by scanning the second data set 120b for any threat.

At step 226, after the threat testing, a fourth test result data 130d is received by the cybersecurity threat detection program effectiveness assessment system 100. The fourth test result data 130d may comprise at least one of a false positive rate of the second cybersecurity threat detection program 110b, a true positive rate of the second cybersecurity threat detection program 110b, a threat detection rate of the second cybersecurity threat detection program 110b, or a latency measurement of the second cybersecurity threat detection program 110b. Thus, the cybersecurity threat detection program effectiveness assessment system 100 advantageously allows many different types of test results 130 to be used.

At step 228, the processor 102 executes instructions 112 to statistically analyse the third test result data 130c together with the fourth test result data 130d. The processor 102 may execute instructions 112 to compare the mean of the third test result data 130c with the mean of the fourth test result data 130d in order to statistically analyse the third test result data 130c together with the fourth test result data 130d. The processor 102 may also execute instructions 112 to perform a t-test on the third test result data 130c and the fourth test result data 130d in order to statistically analyse the third test result data 130c together with the fourth test result data 130d. The t-test has advantageously been shown to be an accurate and reliable method of assessing the effectiveness of cybersecurity threat detection programs 110.

At step 230, the processor 102 executes instructions 112 to determine a second statistical analysis result data 140b. One advantage of statistically analysing the third test result data 130c together with the fourth test result data 130d is that it produces objective results that are verifiable. Another advantage of statistically analysing the third test result data 130c together with the fourth test result data 130d is that correlations between the third test result data 130c and the fourth test result data 130d or between the first data set 120a and the second data set 120b may be identified. For instance, the cybersecurity threat detection program effectiveness assessment method 200 may determine whether the second cybersecurity threat detection program 110b would perform sufficiently well under two different operating conditions, because the second cybersecurity threat detection program 110b may perform well under only one of the operating conditions. If the second cybersecurity threat detection program 110b is configured for use in vehicles to detect cyberthreats, the two operating conditions may, for example, respectively be highway travel and urban travel. Moreover, by statistically analysing the third test result data 130c together with the fourth test result data 130d, advantageously, the second statistical analysis result data 140b obtained would quantitatively indicate the effectiveness of the second cybersecurity threat detection program 110b.

One advantage of receiving the third test result data 130c and the fourth test result data 130d from the second cybersecurity threat detection program 110b using the same first data set 120a and the same second data set 120b as those tested by the first cybersecurity threat detection program 110a, is that a common and objective basis for comparing both the first cybersecurity threat detection program 110a and the second cybersecurity threat detection program 110b is provided.

At step 232, the processor 102 executes instructions 112 to compare the second statistical analysis result data 140b with the effectiveness threshold value 150a. The effectiveness threshold value 150a may be a numerical value or a numerical range, that is an indication of the effectiveness of a cybersecurity threat detection program 110 in detecting threats. One advantage of comparing the second statistical analysis result data 140b with the effectiveness threshold value 150a is that the comparison of two numbers is direct, simple to interpret and objective. Moreover, the step of comparing the second statistical analysis result data 140b with the effectiveness threshold value 150a is a bright-line test for whether a cybersecurity threat detection program 110 is suitable for the intended purposes.

At step 234, the processor 102 executes instructions 112 to generate a second recommendation for the use of the second cybersecurity threat detection program 110b if the second statistical analysis result data 140b reaches the effectiveness threshold value 150a. The second recommendation may comprise a message displayed on the screen 106.

At step 236, the processor 102 executes instructions 112 to compare the first statistical analysis result data 140a of the first cybersecurity threat detection program 110a with the second statistical analysis result data 140b of the second cybersecurity threat detection program 110b. One advantage of comparing the first statistical analysis result data 140a with the second statistical analysis result data 140b is that the comparison of two numbers is direct, simple to interpret and objective. Moreover, the step of comparing first statistical analysis result data 140a with the second statistical analysis result data 140b is a bright-line test for whether the first cybersecurity threat detection program 110a is more suitable for the intended purposes or the second cybersecurity threat detection program 110b is more suitable.

At step 238, the processor 102 executes instructions 112 to generate a third recommendation for the use of the cybersecurity threat detection program 110 which has the lower statistical analysis result data 140. This third recommendation may, for example, be which of the cybersecurity threat detection programs 110 assessed is the most suitable cybersecurity threat detection program 110 for a particular purpose. The third recommendation may comprise a message displayed on the screen 106.

Finally, the cybersecurity threat detection program effectiveness assessment method 200 ends at step 240.

One advantage of the cybersecurity threat detection program effectiveness assessment method 200 is that this cybersecurity threat detection program effectiveness assessment method 200 obviates the necessity to install the cybersecurity threat detection programs 110 on a device, for instance, a vehicle computer system, in order to assess the effectiveness of the cybersecurity threat detection program 110.

Although the invention has been described in considerable detail with reference to certain embodiments or aspects, other embodiments or aspects are possible.

For example, the cybersecurity threat detection program effectiveness assessment method 200 may assess more than two cybersecurity threat detection programs 110.

In addition, other types of test results may be used, for instance, precision or accuracy of a cybersecurity threat detection program 110.

## Claims

1. A computer-implemented cybersecurity threat detection program effectiveness assessment method (200) for use in vehicles, the cybersecurity threat detection program effectiveness assessment method (200) comprising: receiving
first test result data (130) obtained from threat testing a first data set (120) comprising manipulated threats data by a first cybersecurity threat detection program (110);
receiving second test result data (130) obtained from threat testing a second data set (120) comprising manipulated threats data by the first cybersecurity threat detection program (110),
wherein the first data set (120) reflects a different vehicle operating condition from that of the second data set (120);
statistically analysing the first test result data (130) together with the second test result data (130); and
determining a first statistical analysis result data (140) that indicates the effectiveness of the first cybersecurity threat detection program (110).

2. The cybersecurity threat detection program effectiveness assessment method (200) of claim 1, further comprising:
providing, by a processor (102), the first data set (120) comprising manipulated threats data for threat testing by the first cybersecurity threat detection program (110); and
providing, by the processor (102), the second data set (120) comprising manipulated threats data for threat testing by the first cybersecurity threat detection program (110).

3. The cybersecurity threat detection program effectiveness assessment method (200) of any one of the preceding claims, wherein the first test result data (130) and the second test result data (130) comprise at least one of:
a false positive rate of the first cybersecurity threat detection program (110);
a true positive rate of the first cybersecurity threat detection program (110);
a threat detection rate of the first cybersecurity threat detection program (110); or
a latency measurement of the first cybersecurity threat detection program (110).

4. The cybersecurity threat detection program effectiveness assessment method (200) of any one of the preceding claims, wherein statistically analysing the first test result data (130) together with the second test result data (130) comprises determining, by a processor (102), whether the first test result data (130) is statistically different from the second test result data (130).

5. The cybersecurity threat detection program effectiveness assessment method (200) of any one of the preceding claims,
wherein statistically analysing the first test result data (130) together with the second test result data (130) comprises comparing, by a processor (102), the mean of the first test result data (130) with the mean of the second test result data (130)
and/or
wherein statistically analysing the first test result data (130) together with the second test result data (130) comprises performing, by the processor (102), a t-test on the first test result data (130) and the second test result data (130).

6. The cybersecurity threat detection program effectiveness assessment method (200) of any one of the preceding claims, further comprising:
receiving, by a processor (102), a third test result data (130) obtained from threat testing the first data set (120) by a second cybersecurity threat detection program (110);
receiving, by the processor (102), a fourth test result data (130) obtained from threat testing the second data set (120) by the second cybersecurity threat detection program (110) ;
statistically analysing, by the processor (102), the third test result data (130) together with the fourth test result data (130); and
determining, by the processor (102), a second statistical analysis result data (140) that indicates the effectiveness of the second cybersecurity threat detection program (110).

7. The cybersecurity threat detection program effectiveness assessment method (200) of claim 6, further comprising:
providing, by the processor (102), the first data set (120) comprising manipulated data for threat testing by the second cybersecurity threat detection program (110); and
providing, by the processor (102), the second data set (120) comprising manipulated data for threat testing by the second cybersecurity threat detection program (110).

8. The cybersecurity threat detection program effectiveness assessment method (200) of any one of claims 6-7, further comprising:
comparing, by the processor (102), the first statistical analysis result data (140) with an effectiveness threshold value (150);
generating, by the processor (102), a first recommendation for the use of the first cybersecurity threat detection program (110) if the first statistical analysis result data (140) reaches the effectiveness threshold value (150);
comparing, by the processor (102), the second statistical analysis result data (140) with the effectiveness threshold value (150); and
generating, by the processor (102), a second recommendation for the use of the second cybersecurity threat detection program (110) if the second statistical analysis result data (140) reaches the effectiveness threshold value (150).

9. The cybersecurity threat detection program effectiveness assessment method (200) of any one of claims 6-8, further comprising:
comparing, by the processor (102), the first statistical analysis result data (140) of the first cybersecurity threat detection program (110) with the second statistical analysis result data (140) of the second cybersecurity threat detection program (110); and
generating, by the processor (102), a third recommendation for the use of the cybersecurity threat detection program (110) which has the lower statistical analysis result data (140).

10. A non-transitory computer-readable medium with instructions (112) stored thereon, that when executed by a processor (102), performs a cybersecurity threat detection program effectiveness assessment method (200) for use in vehicles, wherein the method comprises:
receiving a first test result data (130) obtained from threat testing a first data set (120) comprising manipulated threats data by a cybersecurity threat detection program (110);
receiving a second test result data (130) obtained from threat testing a second data set (120) comprising manipulated threats data by the cybersecurity threat detection program (110), wherein the first data set (120) reflects a different vehicle operating condition from that of the second data set (120);
statistically analysing the first test result data (130) together with the second test result data (130); and
determining a statistical analysis result data (140) that indicates the effectiveness of the cybersecurity threat detection program (110).

11. A cybersecurity threat detection program effectiveness assessment system (100) in a vehicle, comprising means for carrying out a method according to any claim 1-9, comprising:
a first memory unit configured to storing a first test result data (130) obtained from threat testing a first data set (120) comprising manipulated threats data by a cybersecurity threat detection program (110);
a second memory unit configured to storing a second test result data (130) obtained from threat testing a second data set (120) comprising manipulated threats data by the cybersecurity threat detection program (110), wherein the first data set (120) reflects a different vehicle operating condition from that of the second data set (120); a processor (102) configured to statistically analysing the first test result data (130) together with the second test result data (130), and determining a statistical analysis result data (140) that indicates the effectiveness of the cybersecurity threat detection program (110).

## Patentansprüche

1. Computerimplementiertes Verfahren zur Wirksamkeitsbewertung von Cybersecurity-Bedrohungsdetektionsprogrammen (200) zum Verwenden in Fahrzeugen, wobei das Verfahren zur Wirksamkeitsbewertung von Cybersecurity-Bedrohungsdetektionsprogrammen (200) umfasst: Empfangen erster Testergebnisdaten (130), die aus Bedrohungstesten eines ersten Datensatzes (120), der manipulierte Bedrohungsdaten umfasst, durch ein erstes Cybersecurity-Bedrohungsdetektionsprogramm (110) erhalten werden; Empfangen zweiter Testergebnisdaten (130), die aus Bedrohungstesten eines zweiten Datensatzes (120), der manipulierte Bedrohungsdaten umfasst, durch das erste Cybersecurity-Bedrohungsdetektionsprogramm (110) erhalten werden, wobei der erste Datensatz (120) einen anderen Fahrzeugbetriebszustand als den des zweiten Datensatzes (120) widerspiegelt;
statistisches Analysieren der ersten Testergebnisdaten (130) zusammen mit den zweiten Testergebnisdaten (130); und
Bestimmen erster statistischer Analyseergebnisdaten (140), die die Wirksamkeit des ersten Cybersecurity-Bedrohungsdetektionsprogramms (110) angeben.

2. Verfahren zur Wirksamkeitsbewertung von Cybersecurity-Bedrohungsdetektionsprogrammen (200) nach Anspruch 1, ferner umfassend:
Bereitstellen, durch einen Prozessor (102), des ersten Datensatzes (120), der manipulierte Bedrohungsdaten umfasst, zum Bedrohungstesten durch das erste Cybersecurity-Bedrohungsdetektionsprogramm (110); und
Bereitstellen, durch den Prozessor (102), des zweiten Datensatzes (120), der manipulierte Bedrohungsdaten umfasst, zum Bedrohungstesten durch das erste Cybersecurity-Bedrohungsdetektionsprogramm (110).

3. Verfahren zur Wirksamkeitsbewertung von Cybersecurity-Bedrohungsdetektionsprogrammen (200) nach einem der vorhergehenden Ansprüche, wobei die ersten Testergebnisdaten (130) und die zweiten Testergebnisdaten (130) mindestens eines von Folgendem umfassen:
eine Falsch-positiv-Rate des ersten Cybersecurity-Bedrohungsdetektionsprogramms (110);
eine Richtig-positiv-Rate des ersten Cybersecurity-Bedrohungsdetektionsprogramms (110);
eine Bedrohungsdetektionsrate des ersten Cybersecurity-Bedrohungsdetektionsprogramms (110); oder
eine Latenzmessung des ersten Cybersecurity-Bedrohungsdetektionsprogramms (110).

4. Verfahren zur Wirksamkeitsbewertung von Cybersecurity-Bedrohungsdetektionsprogrammen (200) nach einem der vorhergehenden Ansprüche, wobei statistisches Analysieren der ersten Testergebnisdaten (130) zusammen mit den zweiten Testergebnisdaten (130) Bestimmen, durch einen Prozessor (102), ob die ersten Testergebnisdaten (130) statistisch verschieden von den zweiten Testergebnisdaten (130) sind, umfasst.

5. Verfahren zur Wirksamkeitsbewertung von Cybersecurity-Bedrohungsdetektionsprogrammen (200) nach einem der vorhergehenden Ansprüche, wobei statistisches Analysieren der ersten Testergebnisdaten (130) zusammen mit den zweiten Testergebnisdaten (130) Vergleichen, durch einen Prozessor (102), des Mittelwerts der ersten Testergebnisdaten (130) mit dem Mittelwert der zweiten Testergebnisdaten (130) umfasst
und/oder
wobei statistisches Analysieren der ersten Testergebnisdaten (130) zusammen mit den zweiten Testergebnisdaten (130) Durchführen, durch den Prozessor (102), eines T-Tests an den ersten Testergebnisdaten (130) und den zweiten Testergebnisdaten (130) umfasst.

6. Verfahren zur Wirksamkeitsbewertung von Cybersecurity-Bedrohungsdetektionsprogrammen (200) nach einem der vorhergehenden Ansprüche, ferner umfassend:
Empfangen, durch einen Prozessor (102), dritter Testergebnisdaten (130), die aus Bedrohungstesten des ersten Datensatzes (120) durch ein zweites Cybersecurity-Bedrohungsdetektionsprogramm (110) erhalten werden;
Empfangen, durch den Prozessor (102), vierter Testergebnisdaten (130), die aus Bedrohungstesten des zweiten Datensatzes (120) durch das zweite Cybersecurity-Bedrohungsdetektionsprogramm (110) erhalten werden;
statistisches Analysieren, durch den Prozessor (102), der dritten Testergebnisdaten (130) zusammen mit den vierten Testergebnisdaten (130); und
Bestimmen, durch den Prozessor (102), zweiter statistischer Analyseergebnisdaten (140), die die Wirksamkeit des zweiten Cybersecurity-Bedrohungsdetektionsprogramms (110) angeben.

7. Verfahren zur Wirksamkeitsbewertung von Cybersecurity-Bedrohungsdetektionsprogrammen (200) nach Anspruch 6, ferner umfassend:
Bereitstellen, durch den Prozessor (102), des ersten Datensatzes (120), der manipulierte Daten umfasst, zum Bedrohungstesten durch das zweite Cybersecurity-Bedrohungsdetektionsprogramm (110); und
Bereitstellen, durch den Prozessor (102), des zweiten Datensatzes (120), der manipulierte Daten umfasst, zum Bedrohungstesten durch das zweite Cybersecurity-Bedrohungsdetektionsprogramm (110).

8. Verfahren zur Wirksamkeitsbewertung von Cybersecurity-Bedrohungsdetektionsprogrammen (200) nach einem der Ansprüche 6-7, ferner umfassend:
Vergleichen, durch den Prozessor (102), der ersten statistischen Analyseergebnisdaten (140) mit einem Wirksamkeitsschwellenwert (150);
Erzeugen, durch den Prozessor (102), einer ersten Empfehlung zum Verwenden des ersten Cybersecurity-Bedrohungsdetektionsprogramms (110), wenn die ersten statistischen Analyseergebnisdaten (140) den Wirksamkeitsschwellenwert (150) erreichen;
Vergleichen, durch den Prozessor (102), der zweiten statistischen Analyseergebnisdaten (140) mit dem Wirksamkeitsschwellenwert (150); und
Erzeugen, durch den Prozessor (102), einer zweiten Empfehlung zum Verwenden des zweiten Cybersecurity-Bedrohungsdetektionsprogramms (110), wenn die zweiten statistischen Analyseergebnisdaten (140) den Wirksamkeitsschwellenwert (150) erreichen.

9. Verfahren zur Wirksamkeitsbewertung von Cybersecurity-Bedrohungsdetektionsprogrammen (200) nach einem der Ansprüche 6-8, ferner umfassend:
Vergleichen, durch den Prozessor (102), der ersten statistischen Analyseergebnisdaten (140) des ersten Cybersecurity-Bedrohungsdetektionsprogramms (110) mit den zweiten statistischen Analyseergebnisdaten (140) des zweiten Cybersecurity-Bedrohungsdetektionsprogramms (110); und
Erzeugen, durch den Prozessor (102), einer dritten Empfehlung zum Verwenden des Cybersecurity-Bedrohungsdetektionsprogramms (110), das die niedrigeren statistischen Analyseergebnisdaten (140) aufweist.

10. Nichtflüchtiges computerlesbares Medium mit darauf gespeicherten Anweisungen (112), die, wenn sie durch einen Prozessor (102) ausgeführt werden, ein Verfahren zur Wirksamkeitsbewertung von Cybersecurity-Bedrohungsdetektionsprogrammen (200) zum Verwenden in Fahrzeugen durchführen,
wobei das Verfahren umfasst:
Empfangen erster Testergebnisdaten (130), die aus Bedrohungstesten eines ersten Datensatzes (120), der manipulierte Bedrohungsdaten umfasst, durch ein Cybersecurity-Bedrohungsdetektionsprogramm (110) erhalten werden;
Empfangen zweiter Testergebnisdaten (130), die aus Bedrohungstesten eines zweiten Datensatzes (120), der manipulierte Bedrohungsdaten umfasst, durch das Cybersecurity-Bedrohungsdetektionsprogramm (110) erhalten werden, wobei der erste Datensatz (120) einen anderen Fahrzeugbetriebszustand als den des zweiten Datensatzes (120) widerspiegelt;
statistisches Analysieren der ersten Testergebnisdaten (130) zusammen mit den zweiten Testergebnisdaten (130); und
Bestimmen von statistischen Analyseergebnisdaten (140), die die Wirksamkeit des Cybersecurity-Bedrohungsdetektionsprogramms (110) angeben.

11. System zur Wirksamkeitsbewertung von Cybersecurity-Bedrohungsdetektionsprogrammen (100) in einem Fahrzeug, umfassend Mittel zum Durchführen eines Verfahrens nach einem der Ansprüche 1-9, umfassend:
eine erste Speichereinheit, konfiguriert zum Speichern von ersten Testergebnisdaten (130), erhalten aus Bedrohungstesten eines ersten Datensatzes (120), umfassend manipulierte Bedrohungsdaten, durch ein Cybersecurity-Bedrohungsdetektionsprogramm (110);
eine zweite Speichereinheit, konfiguriert zum Speichern von zweiten Testergebnisdaten (130), erhalten aus Bedrohungstesten eines zweiten Datensatzes (120), umfassend manipulierte Bedrohungsdaten, durch das Cybersecurity-Bedrohungsdetektionsprogramm (110), wobei der erste Datensatz (120) einen anderen Fahrzeugbetriebszustand als den des zweiten Datensatzes (120) widerspiegelt; einen Prozessor (102), konfiguriert zum statistischen Analysieren der ersten Testergebnisdaten (130) zusammen mit den zweiten Testergebnisdaten (130) und Bestimmen von statistischen Analyseergebnisdaten (140), die die Wirksamkeit des Cybersecurity-Bedrohungsdetektionsprogramms (110) angeben.

## Revendications

1. Procédé d'évaluation de l'efficacité d'un programme de détection des menaces de cybersécurité mis en œuvre par ordinateur (200) destiné à être utilisé dans des véhicules, le procédé d'évaluation de l'efficacité d'un programme de détection des menaces de cybersécurité (200) comprenant : la réception de premières données de résultat de test (130) obtenues à partir du test de menaces réalisé sur un premier ensemble de données (120) comprenant des données de menaces manipulées par un premier programme de détection des menaces de cybersécurité (110) ;
la réception de deuxièmes données de résultat de test (130) obtenues à partir du test de menaces réalisé sur un second ensemble de données (120) comprenant des données de menaces manipulées par le premier programme de détection des menaces de cybersécurité (110),
dans lequel le premier ensemble de données (120) reflète une condition de fonctionnement de véhicule différente de celle du second ensemble de données (120) ;
l'analyse statistique des premières données de résultat de test (130) ainsi que des deuxièmes données de résultat de test (130) ; et
la détermination de premières données de résultat d'analyse statistique (140) qui indiquent l'efficacité du premier programme de détection des menaces de cybersécurité (110).

2. Procédé d'évaluation de l'efficacité d'un programme de détection des menaces de cybersécurité (200) selon la revendication 1, comprenant en outre :
la fourniture, par un processeur (102), du premier ensemble de données (120) comprenant des données de menaces manipulées pour le test de menaces réalisé par le premier programme de détection des menaces de cybersécurité (110) ; et
la fourniture, par le processeur (102), du second ensemble de données (120) comprenant des données de menaces manipulées pour le test de menaces réalisé par le premier programme de détection des menaces de cybersécurité (110).

3. Procédé d'évaluation de l'efficacité d'un programme de détection des menaces de cybersécurité (200) selon l'une quelconque des revendications précédentes, dans lequel les premières données de résultat de test (130) et les deuxièmes données de résultat de test (130) comprennent au moins l'un des éléments suivants :
un taux de faux positifs du premier programme de détection des menaces de cybersécurité (110) ;
un taux de vrais positifs du premier programme de détection des menaces de cybersécurité (110) ;
un taux de détection des menaces du premier programme de détection des menaces de cybersécurité (110) ; ou
une mesure de latence du premier programme de détection des menaces de cybersécurité (110).

4. Procédé d'évaluation de l'efficacité d'un programme de détection des menaces de cybersécurité (200) selon l'une quelconque des revendications précédentes, dans lequel l'analyse statistique des premières données de résultat de test (130) ainsi que des deuxièmes données de résultat de test (130) comprend le fait de déterminer, par un processeur (102), si les premières données de résultat de test (130) sont statistiquement différentes des deuxièmes données de résultat de test (130).

5. Procédé d'évaluation de l'efficacité d'un programme de détection des menaces de cybersécurité (200) selon l'une quelconque des revendications précédentes, dans lequel l'analyse statistique des premières données de résultat de test (130) ainsi que des deuxièmes données de résultat de test (130) comprend le fait de comparer, par un processeur (102), la moyenne des premières données de résultat de test (130) avec la moyenne des deuxièmes données de résultat de test (130) et/ou
dans lequel l'analyse statistique des premières données de résultat de test (130) ainsi que des deuxièmes données de résultat de test (130) comprend la réalisation, par le processeur (102), d'un test t sur les premières données de résultat de test (130) et sur les deuxièmes données de résultat de test (130).

6. Procédé d'évaluation de l'efficacité d'un programme de détection des menaces de cybersécurité (200) selon l'une quelconque des revendications précédentes, comprenant en outre :
la réception, par un processeur (102), de troisièmes données de résultat de test (130) obtenues à partir du test de menaces réalisé sur le premier ensemble de données (120) par un second programme de détection des menaces de cybersécurité (110) ;
la réception, par le processeur (102), de quatrièmes données de résultat de test (130) obtenues à partir du test de menaces réalisé sur le second ensemble de données (120) par le second programme de détection des menaces de cybersécurité (110) ;
l'analyse statistique, par le processeur (102), des troisièmes données de résultat de test (130) ainsi que des quatrièmes données de résultat de test (130) ; et
la détermination, par le processeur (102), de secondes données de résultat d'analyse statistique (140) qui indiquent l'efficacité du second programme de détection des menaces de cybersécurité (110).

7. Procédé d'évaluation de l'efficacité d'un programme de détection des menaces de cybersécurité (200) selon la revendication 6, comprenant en outre :
la fourniture, par le processeur (102), du premier ensemble de données (120) comprenant des données manipulées pour le test de menaces réalisé par le second programme de détection des menaces de cybersécurité (110) ; et
la fourniture, par le processeur (102), du second ensemble de données (120) comprenant des données manipulées pour le test de menaces réalisé par le second programme de détection des menaces de cybersécurité (110).

8. Procédé d'évaluation de l'efficacité d'un programme de détection des menaces de cybersécurité (200) selon l'une quelconque des revendications 6 et 7, comprenant en outre :
le fait de comparer, par le processeur (102), les premières données de résultat d'analyse statistique (140) avec une valeur de seuil d'efficacité (150) ;
la génération, par le processeur (102), d'une première recommandation pour l'utilisation du premier programme de détection des menaces de cybersécurité (110) si les premières données de résultat d'analyse statistique (140) atteignent la valeur de seuil d'efficacité (150) ;
le fait de comparer, par le processeur (102), les secondes données de résultat d'analyse statistique (140) avec la valeur de seuil d'efficacité (150) ; et
la génération, par le processeur (102), d'une deuxième recommandation pour l'utilisation du second programme de détection des menaces de cybersécurité (110) si les secondes données de résultat d'analyse statistique (140) atteignent la valeur de seuil d'efficacité (150).

9. Procédé d'évaluation de l'efficacité d'un programme de détection des menaces de cybersécurité (200) selon l'une quelconque des revendications 6 à 8, comprenant en outre :
le fait de comparer, par le processeur (102), les premières données de résultat d'analyse statistique (140) du premier programme de détection des menaces de cybersécurité (110) avec les secondes données de résultat d'analyse statistique (140) du second programme de détection des menaces de cybersécurité (110) ; et la génération, par le processeur (102), d'une troisième recommandation pour l'utilisation du programme de détection des menaces de cybersécurité (110) qui a les données de résultat d'analyse statistique (140) les plus basses.

10. Support non transitoire lisible par ordinateur sur lequel sont stockées des instructions (112), qui, lorsqu'elles sont exécutées par un processeur (102), réalisant un procédé d'évaluation de l'efficacité d'un programme de détection des menaces de cybersécurité (200) destiné à être utilisé dans des véhicules,
dans lequel le procédé comprend :
la réception de premières données de résultat de test (130) obtenues à partir du test de menaces réalisé sur un premier ensemble de données (120) comprenant des données de menaces manipulées par un programme de détection des menaces de cybersécurité (110) ;
la réception de deuxièmes données de résultat de test (130) obtenues à partir du test de menaces réalisé sur un second ensemble de données (120) comprenant des données de menaces manipulées par le programme de détection des menaces de cybersécurité (110), dans lequel le premier ensemble de données (120) reflète une condition de fonctionnement de véhicule différente de celle du second ensemble de données (120) ;
l'analyse statistique des premières données de résultat de test (130) ainsi que des deuxièmes données de résultat de test (130) ; et
la détermination de données de résultat d'analyse statistique (140) qui indiquent l'efficacité du programme de détection des menaces de cybersécurité (110).

11. Système d'évaluation de l'efficacité d'un programme de détection des menaces de cybersécurité (100) dans un véhicule, comprenant des moyens destinés à exécuter un procédé selon l'une quelconque des revendications 1 à 9, comprenant :
une première unité de mémoire configurée pour stocker de premières données de résultat de test (130) obtenues à partir du test de menaces réalisé sur un premier ensemble de données (120) comprenant des données de menaces manipulées par un programme de détection des menaces de cybersécurité (110) ;
une seconde unité de mémoire configurée pour stocker de deuxièmes données de résultat de test (130) obtenues à partir du test de menaces réalisé sur un second ensemble de données (120) comprenant des données de menaces manipulées par le programme de détection des menaces de cybersécurité (110), dans lequel le premier ensemble de données (120) reflète une condition de fonctionnement de véhicule différente de celle du second ensemble de données (120) ; un processeur (102) configuré pour analyser statistiquement les premières données de résultat de test (130) ainsi que les deuxièmes données de résultat de test (130), et déterminer des données de résultat d'analyse statistique (140) qui indiquent l'efficacité du programme de détection des menaces de cybersécurité (110).
